# EUROPEAN PATENT APPLICATION

(11) **EP 4 835 789 A1**
(43) Date of publication of application: **04.11.2026**
(21) Application number: 24924915.2
(22) Date of filing: 23.12.2024
(51) Int. Cl.: G06Q 30/02, H04N 21/458, H04N 21/466, H04N 21/81

(54) **ELECTRONIC DEVICE AND OPERATION METHOD THEREOF**

(30) Priority: 16.02.2024 KR 20240022673
(71) Applicant: Samsung Electronics Co., Ltd., Suwon-si, Gyeonggi-do 16677 (KR)
(72) Inventor: KIM, Chansung, Suwon-si, Gyeonggi-do 16677 (KR); JEONG, Donghwa, Suwon-si, Gyeonggi-do 16677 (KR); HWANG, Euihyeon, Suwon-si, Gyeonggi-do 16677 (KR); KO, Changgun, Suwon-si, Gyeonggi-do 16677 (KR); KIM, Dowan, Suwon-si, Gyeonggi-do 16677 (KR); KIM, Yujin, Suwon-si, Gyeonggi-do 16677 (KR); LEE, Junwoo, Suwon-si, Gyeonggi-do 16677 (KR)
(74) Representative: Appleyard Lees IP LLP
(86) International application number: PCT/KR2024/020923
(87) International publication number: WO 2025/173890

(57) **Abstract**

A method of operation of an electronic device may be provided, the method comprising the steps of: updating an advertisement list including at least one advertisement obtained from a server, when a refresh time based on a peak time related to advertisement revenue is identified; transmitting, to an application corresponding to an output of a screen including an advertisement area, data corresponding to a first advertisement identified from the advertisement list on the basis of an advertisement unit price; and, when the application is executed, outputting the first advertisement on the basis of the data corresponding to the first advertisement.

## Description

### Technical Field

Various embodiments relate to an electronic device and an operating method thereof. More specifically, the embodiments relate to an electronic device for preferentially outputting an advertisement having higher unit price, and an operating method of the electronic device.

### Background Art

The number of electronic devices that output advertisements through various applications is increasing. When an advertisement is requested from a server after an application is executed, a delay may occur until a response is received from the server and an advertisement image is downloaded and output, and thus, the application may be terminated by a user before the advertisement is output, in which case an opportunity to output the advertisement may be missed. Therefore, through a prefetch function for downloading an advertisement to be output in advance and transmitting the advertisement to an application, the advertisement may be output simultaneously with execution of the application.

However, in a situation where unit prices and output conditions differ for each advertisement, it may be difficult to expect that an advertisement with the highest unit price is output at the time the application is executed simply by performing a prefetch function.

Therefore, research is required on an advertisement output method capable of maximizing advertisement revenue.

### Disclosure of Invention

### Solution to Problem

According to an embodiment, an operating method of an electronic device may include, when a refresh time based on a peak time related to advertisement revenue is identified, updating an advertisement list including at least one advertisement obtained from a server.

According to an embodiment, the operating method of the electronic device may include transmitting, to an application corresponding to an output of a screen including an advertisement area, data corresponding to a first advertisement identified based on an advertisement unit price from among the advertisement list.

According to an embodiment, the operating method of the electronic device may include, when the application is executed, outputting the first advertisement based on the data corresponding to the first advertisement.

According to an embodiment, an electronic device may include memory storing one or more instructions.

According to an embodiment, the electronic device may include one or more processors configured to execute the one or more instructions stored in the memory.

The one or more processors may be configured to execute the one or more instructions to, when a refresh time based on a peak time related to advertisement revenue is identified, update an advertisement list including at least one advertisement obtained from a server.

The one or more processors may be configured to execute the one or more instructions to transmit, to an application corresponding to an output of a screen including an advertisement area, data corresponding to a first advertisement identified based on an advertisement unit price from among the advertisement list.

The one or more processors may be configured to execute the one or more instructions to, when the application is executed, output the first advertisement based on the data corresponding to the first advertisement.

According to an embodiment, a computer-readable recording medium may have recorded thereon a program for performing an operating method of an electronic device, including, when a refresh time based on a peak time related to advertisement revenue is identified, updating an advertisement list including at least one advertisement obtained from a server.

According to an embodiment, the operating method of the electronic device, implemented by the program recorded on the computer-readable recording medium, may include transmitting, to an application corresponding to an output of a screen including an advertisement area, data corresponding to a first advertisement identified based on an advertisement unit price from among the advertisement list.

According to an embodiment, the operating method of the electronic device, implemented by the program recorded on the computer-readable recording medium, may include, when the application is executed, outputting the first advertisement based on the data corresponding to the first advertisement.

### Brief Description of Drawings

FIG. 1 is a diagram illustrating an example in which an electronic device obtains and outputs an advertisement, according to the related art.
FIG. 2 is a diagram illustrating an example in which an electronic device obtains and outputs an advertisement, according to an embodiment of the present disclosure.
FIG. 3 is a diagram illustrating an example in which an electronic device obtains and outputs an advertisement, according to an embodiment of the present disclosure.
FIG. 4 is a flowchart of an operating method of an electronic device, according to an embodiment of the present disclosure.
FIG. 5 is a diagram illustrating an example of an application corresponding to an output of a screen including an advertisement area, according to an embodiment of the present disclosure.
FIG. 6 is a diagram illustrating an example of a method, performed by an electronic device, of predicting a peak time by using artificial intelligence (AI), according to an embodiment of the present disclosure.
FIG. 7 is a diagram illustrating an example of a method, performed by an electronic device, of obtaining a set of advertisements that generate the largest advertisement revenue during an available advertisement output time, by using AI, according to an embodiment of the present disclosure.
FIG. 8 is a flowchart of an operating method of an electronic device, according to an embodiment of the present disclosure.
FIG. 9 is a diagram illustrating an example in which an electronic device obtains and outputs an advertisement, according to an embodiment of the present disclosure.
FIG. 10 is a diagram illustrating an example in which an electronic device obtains and outputs an advertisement, according to an embodiment of the present disclosure.
FIG. 11 is a block diagram of a configuration of an electronic device according to an embodiment of the present disclosure.
FIG. 12 is a detailed block diagram illustrating a configuration of an electronic device according to an embodiment of the present disclosure.

### Mode for the Invention

An embodiment of the present disclosure will be described more fully hereinafter with reference to the accompanying drawings so that the embodiment may be easily implemented by one of ordinary skill in the art. However, the present disclosure may be implemented in different forms and should not be construed as being limited to an embodiment set forth herein.

The terms used in the present disclosure are described using general terms currently widely used in the art by taking into account functions described herein, but may have various other meanings depending on the intent of those skilled in the art, legal precedents, the emergence of new technologies, etc. Thus, the terms used herein should be defined not by simple appellations thereof but based on the meaning of the terms together with the overall description of the present disclosure.

In addition, the terms used herein are only used to describe a particular embodiment, and are not intended to limit the present disclosure.

Throughout the specification, when a part is referred to as being "connected" or "coupled" to another part, it includes not only a case where the part may be "directly connected or coupled to" the other part, but also a case where the part is "electrically connected or coupled to" the other part with another intervening element therebetween.

The use of the terms "the" and similar referents used in the specification, especially in the following claims, is to be construed to cover both the singular and the plural. Furthermore, operations of a method according to the present disclosure described herein may be performed in any suitable order unless the order of the operations is clearly specified herein. The present disclosure is not limited to the described order of the operations.

Expressions such as "in some embodiments" or "in an embodiment" described in various parts of this specification do not necessarily refer to the same embodiment(s).

Some embodiments of the present disclosure may be described in terms of functional block components and various processing operations. Some or all of such functional blocks may be implemented by any number of hardware and/or software components that perform specific functions. For example, the functional blocks of the present disclosure may be implemented by one or more microprocessors or by circuit components for performing certain functions. Furthermore, the functional blocks of the present disclosure may be implemented in various programming or scripting languages. The functional blocks may be implemented using various algorithms executed on one or more processors. Furthermore, the present disclosure may employ techniques of the related art for electronics configuration, signal processing, and/or data processing. Terms such as "mechanism", "element", "means", and "construction" may be used in a broad sense and are not limited to mechanical or physical components.

Furthermore, connecting lines or connectors shown in various figures are intended to represent exemplary functional relationships and/or physical or logical couplings between components in the figures. In an actual device, connections between components may be represented by various alternative or additional functional relationships, physical connections, or logical connections.

As used herein, the term "... unit" or "module" indicates a unit for processing at least one function or operation and may be implemented using hardware or software or a combination of hardware and software.

Furthermore, in the specification, the term "user" may refer to a person who uses an electronic device to control a function or an operation of the electronic device.

In the specification, the expression "at least one of A or B" or "at least one of A, or B" indicates one of only A, only B, and both A and B. Similarly, the expression "at least one of A, B or C" or "at least one of A, B, or C" indicates one of only A, only B, only C, both A and B, both A and C, both B and C, all of A, B, and C, or variations thereof.

In the specification, a 'prefetch' may refer to an operation of downloading an advertisement in advance and transmitting the downloaded advertisement to an application where the advertisement is to be output.

Hereinafter, the present disclosure is described in detail with reference to the accompanying drawings.

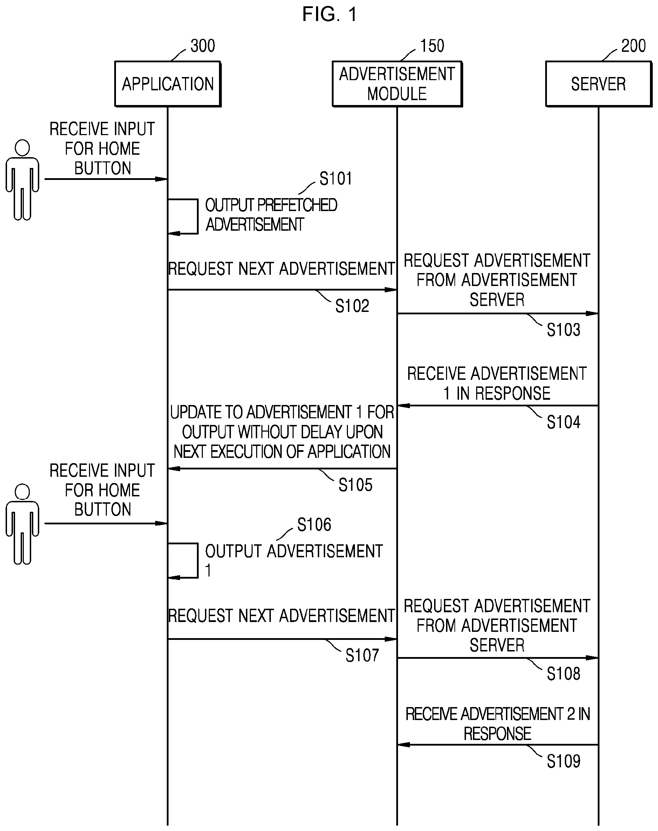

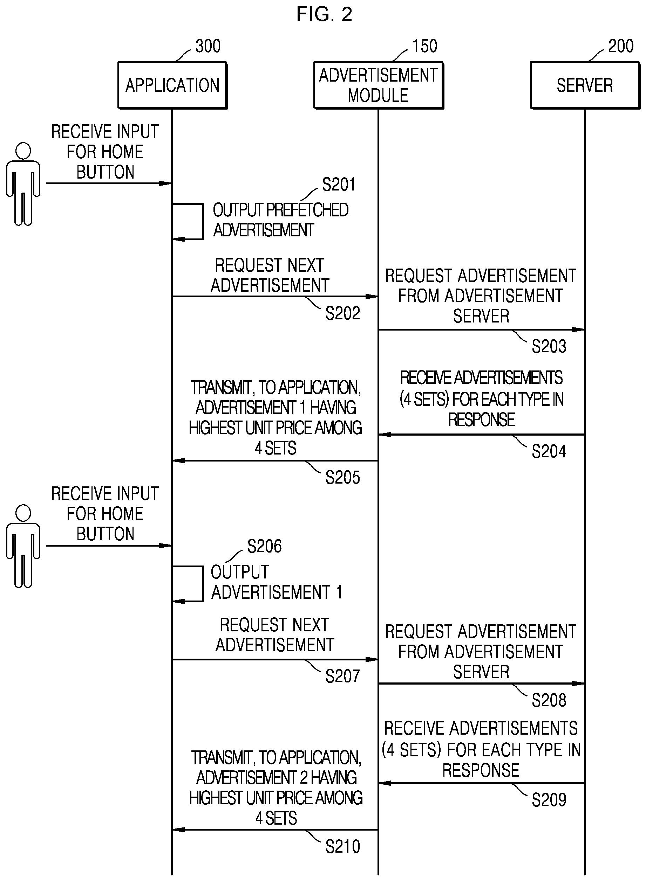

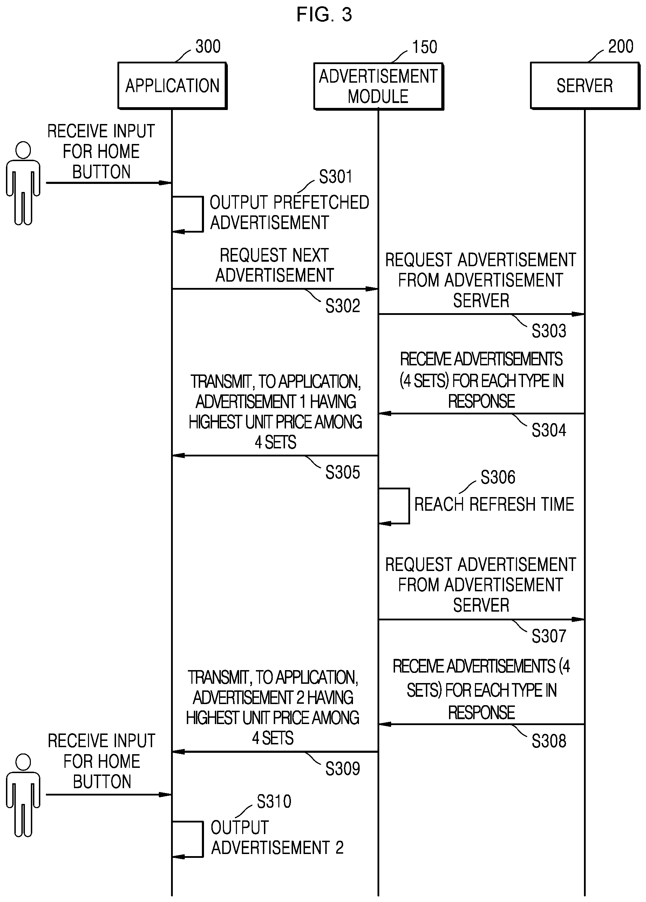

FIG. 1 is a diagram illustrating an example in which an electronic device obtains and outputs an advertisement, according to the related art, and FIGS. 2 and 3 are diagrams illustrating examples in which an electronic device obtains and outputs an advertisement, according to an embodiment of the present disclosure.

In the present disclosure, an electronic device 100 may be a smart television (TV), but this is merely an embodiment, and the electronic device 100 may be implemented in various forms.

In particular, embodiments may be easily implemented in an electronic device including a large video output unit such as a TV, but are not limited thereto. In addition, the electronic device 100 may be implemented in a stationary or portable form, and may be a digital broadcast receiver capable of receiving digital broadcasts.

In an embodiment, the electronic device 100 may be implemented in the form of a device that performs image output as part of its functions while performing other functions.

According to an embodiment of the present disclosure, the electronic device 100 may be implemented in various forms, such as a tablet personal computer (PC), a smartphone, a digital camera, a camcorder, a laptop computer, a smart TV, a netbook computer, a desktop computer, an e-book terminal, a videophone, a digital broadcasting terminal, a personal digital assistant (PDA), a portable multimedia player (PMP), a navigation device, a wearable device, a smart refrigerator, and other home appliances.

The electronic device 100 may have a built-in display, but is not limited thereto, and may be implemented in a form that operates by being connected to an external display even without a built-in display.

For example, the electronic device 100 may be implemented in the form of a device without a display or having a simple display for notifications or the like, such as a set-top box (STB) or an Apple TV, which outputs an image to a separate external display through a video or audio output port.

In this case, the electronic device 100 may include an output port for outputting a video or audio signal to a display. The output port may have a form that allows simultaneous transmission of a video signal and an audio signal, such as High-Definition Multimedia Interface (HDMI), DisplayPort (DP), or Thunderbolt, or may be in a form including respective ports for separately transmitting a video signal and an audio signal.

In an embodiment, the electronic device 100 may transmit a video signal or an audio signal via wired or wireless communication or the like.

The electronic device 100 may be implemented as an electronic device with a flat display, a curved electronic device with a display having a curvature, or a flexible electronic device with an adjustable curvature. An output resolution of the electronic device 100 may include, for example, High Definition (HD), Full HD, Ultra HD, or resolutions higher than the Ultra HD.

The electronic device 100 may provide an advertisement through various applications 300 that output a screen including an advertisement area.

For example, when an input for a home button is received in response to a user input action, such as the user clicking the home button, the electronic device 100 may output an advertisement. The input for the home button may be made through a touch screen of the electronic device 100 or through a related device for controlling the electronic device 100, such as a remote control.

In an embodiment, when an input for a home button by the user is detected, the electronic device 100 may execute an application.

In an embodiment, the application executed when the input for the home button is detected may be a content integration service that allows the user to easily search for desired content from a plurality of applications providing content. In this case, the plurality of applications providing content may include over-the-top (OTT) service applications operated or provided by content providers. Examples of the content integration service may include a smart hub service.

In an embodiment, when the user clicks the home button, the electronic device 100 may execute the content integration service which is the application 300 capable of outputting an advertisement.

When an advertisement is requested from the server 200 after the application 300 is executed, a delay may occur until a response is received from the server 200 and an advertisement image is downloaded and output, and thus, the electronic device 100 may allow the advertisement to be output simultaneously with execution of the application 300 through a prefetch function of downloading an advertisement in advance to be output and transmitting the advertisement to an application.

The electronic device 100 may include an advertisement module 150. The advertisement module 150 may download an advertisement from the server 200 and transmit the received advertisement to the application 300. The advertisement module 150 may be a type of background application or background program that downloads an advertisement from the server 200 and provides the advertisement to the application 300.

In an embodiment, the server 200 may receive an advertisement image from an advertisement provider. The advertisement image may be updated to a new version of the image. In an embodiment, the server 200 may always store the latest advertisement image. In an embodiment, the server 200 may store not only the latest advertisement image but also previous versions of advertisement images.

In an embodiment, the server 200 may store metadata information including a unit price of each advertisement, a time required to output the advertisement, output conditions of the advertisement, the number of times the advertisement is output, a type of the advertisement, a target time slot, a target user, etc. The output conditions of the advertisement may include information on conditions for outputting the corresponding advertisement, such as an available advertisement output time, whether repeated output of the advertisement is possible, and the number of times the advertisement may be repeatedly output.

In the embodiment of FIG. 1 according to the related art, when an input for a home button is received, the electronic device 100 executes the application 300 and simultaneously outputs a prefetched advertisement (S101). Furthermore, after the advertisement is output, the application 300 requests a next advertisement from the advertisement module 150 (S102), and the advertisement module 150, which has received the request, requests an advertisement from the server 200 (S103).

The server 200 may transmit advertisement 1 to the advertisement module 150 in response to receiving the advertisement request (S104).

The advertisement module 150 may prefetch the received advertisement 1 to the application 300 so that the received advertisement 1 may be output without delay when the application 300 is executed next (S105).

Thereafter, when an input for the home button is received again by the user, the electronic device 100 may execute the application 300 and simultaneously output the prefetched advertisement 1 (S106).

After the advertisement is output, the application 300 may request a next advertisement from the advertisement module 150 (S107), and the advertisement module 150 may request an advertisement from the server 200 (S108).

The server 200 may transmit advertisement 2 to the advertisement module 150 in response to receiving the advertisement request (S109).

However, because a unit price and an output condition differ for each advertisement, it may be difficult to expect an effect of outputting advertisements to obtain the largest revenue by simply relying on a method of outputting advertisements using a prefetch function, as shown in FIG. 1.

According to an embodiment of the present disclosure, when an input for a home button is received, the electronic device 100 of FIG. 2 may execute the application 300 and simultaneously output a prefetched advertisement (S201). Furthermore, after the advertisement is output, the application 300 may request a next advertisement from the advertisement module 150 (S202), and the advertisement module 150 may request an advertisement from the server 200 (S203).

In response to receiving the advertisement request, the server 200 may transmit one advertisement for each advertisement type to the advertisement module 150 (S204). In response to receiving the advertisement request, the server 200 may transmit, for each advertisement type, one advertisement having the highest unit price to the advertisement module 150. The electronic device 100 may control the server 200 to transmit, for each advertisement type, one advertisement having the highest unit price.

In an embodiment, there may be four advertisement types, and in this case, a total of four advertisements, one having the highest unit price for each type, may be transmitted from the server 200 to the advertisement module 150. Details regarding advertisement types are described below.

The advertisement module 150 may select advertisement 1 belonging to a type having the highest unit price from among the received advertisements, and prefetch the selected advertisement 1 to the application 300 so that the advertisement 1 may be output without delay when the application 300 is executed next (S205).

Thereafter, when an input for the home button is received again by the user, the electronic device 100 may execute the application 300 and simultaneously output the prefetched advertisement 1 (S206).

After the advertisement is output, the application 300 may request a next advertisement from the advertisement module 150 (S207), and the advertisement module 150 may request an advertisement from the server 200 (S208).

In response to receiving the advertisement request, the server 200 may transmit, to the advertisement module 150, one advertisement having the highest unit price for each advertisement type among advertisements that are outputtable at a time when the advertisement request is received (S209).

In an embodiment, when four advertisement types exist, the server 200 may transmit a total of four advertisements, one for each type, to the advertisement module 150. The advertisement module 150 may select advertisement 2 belonging to a type having the highest unit price from among the received advertisements, and prefetch the selected advertisement 2 to the application 300 so that the advertisement 2 may be output without delay when the application 300 is executed next (S210).

Through the embodiment of FIG. 2, the electronic device 100 may allow an advertisement having a high unit price to be preferentially output among advertisements, thereby achieving an effect of increasing advertisement revenue.

According to an embodiment of the present disclosure, when an input for a home button is received, the electronic device 100 of FIG. 3 may execute the application 300 and simultaneously output a prefetched advertisement (S301). Furthermore, after the advertisement is output, the application 300 may request a next advertisement from the advertisement module 150 (S302), and the advertisement module 150 may request an advertisement from the server 200 (S303).

In response to receiving the advertisement request, the server 200 may transmit, for each advertisement type, one advertisement having the highest unit price to the advertisement module 150 (S304).

In an embodiment, the electronic device 100 may control the server 200 to transmit, for each advertisement type, one advertisement having the highest unit price.

In an embodiment, there may be four advertisement types, and in this case, a total of four advertisements, one having the highest unit price for each type, may be transmitted from the server 200 to the advertisement module 150. Details regarding advertisement types are described below.

The advertisement module 150 may select advertisement 1 belonging to a type having the highest unit price from among the received advertisements, and prefetch the selected advertisement 1 to the application 300 so that the advertisement 1 may be output without delay when the application 300 is executed next (S305).

However, because it is difficult to predict a time when a user executes an application and a prefetched advertisement is output, a case may occur in which, before the prefetched advertisement is output, an advertisement is updated to a new advertisement such that a version of the advertisement is changed, a new advertisement having a higher unit price than the prefetched advertisement is generated, or an available advertisement output time among output conditions of the prefetched advertisement expires.

Accordingly, the electronic device 100 may predict a peak time when advertisement revenue is expected to be high and set a refresh time so that the prefetched advertisement may be updated before the predicted peak time.

Details regarding a method of predicting the peak time and setting of the refresh time are described below.

The advertisement module 150 may frequently check whether the refresh time has been reached before the prefetched advertisement 1 is output (S306).

When the refresh time is reached, the advertisement module 150 may request an advertisement from the server 200 regardless of whether the advertisement 1 is output (S307).

In response to receiving the advertisement request, the server 200 may transmit, to the advertisement module 150, one advertisement having the highest unit price for each advertisement type among advertisements outputtable at a time when the advertisement request is received (S308). That is, the server 200 may update at least one advertisement stored in the electronic device 100.

In an embodiment, when four advertisement types exist, the server 200 may transmit a total of four advertisements, one for each type, to the advertisement module 150. The advertisement module 150 may select advertisement 2 belonging to a type having the highest unit price from among the received advertisements, and prefetch the selected advertisement 2 to the application 300 so that the advertisement 2 may be output without delay when the application 300 is executed next (S309).

Thereafter, when an input for the home button is received again by the user, the electronic device 100 may execute the application 300 and simultaneously output the prefetched advertisement 2 (S310).

When an advertisement list is updated by receiving an advertisement from the server 200 only after an advertisement is output, an opportunity to output an advertisement suitable for output at a specific time slot or an advertisement having a higher unit price at a peak time may be lost.

According to the embodiment of FIG. 3, a peak time, including prime time slots such as weekday evenings or weekends, during which advertisement unit prices are high, may be predicted in advance, and a refresh time may be set so that an advertisement list may be updated with a new advertisement. The electronic device 100 may increase advertisement revenue by allowing an advertisement having the highest unit price to be selected and output at a refresh time.

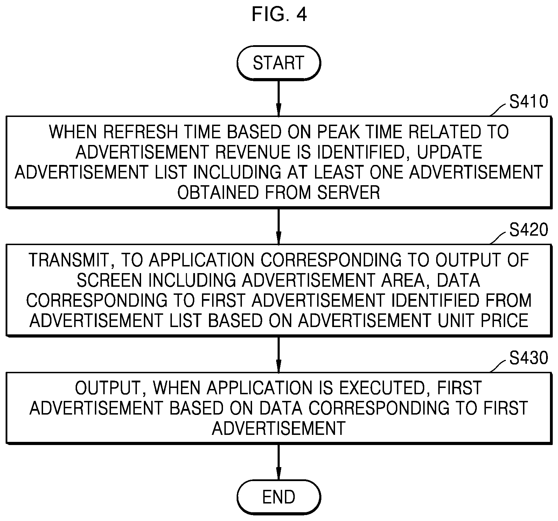

FIG. 4 is a flowchart of an operating method of an electronic device, according to an embodiment of the present disclosure.

Referring to FIG. 4, according to an embodiment of the present disclosure, when a refresh time based on a peak time related to advertisement revenue is identified, the electronic device 100 may update an advertisement list including at least one advertisement obtained from the server (S410).

According to an embodiment of the present disclosure, the electronic device 100 may transmit an advertisement request to the server 200, obtain at least one advertisement from the server 200, and store the obtained at least one advertisement as an advertisement list.

In an embodiment, the server 200 may transmit at least one advertisement to the advertisement module 150 in response to receiving the advertisement request from the electronic device 100.

In an embodiment of the present disclosure, the at least one advertisement obtained from the server 200 may be each advertisement having the highest unit price for each advertisement type among advertisements outputtable at a time of obtaining the at least one advertisement. The server 200 may transmit, to the electronic device 100, one advertisement having the highest unit price for each advertisement type among advertisements outputtable at a time of the advertisement request of the electronic device 100.

In the present disclosure, the advertisement type is a classification of advertisements according to output conditions, and may include, for example, a roadblock-type advertisement, a reservation-type advertisement, a promotion-type advertisement, and a house-type advertisement.

In an embodiment of the present disclosure, the roadblock-type advertisement may refer to a type of advertisement in which an advertiser purchases an entire specific time slot and only an advertisement of the advertiser is displayed during the corresponding time slot. In an embodiment, the roadblock-type advertisement may be a type of advertisement having a higher unit price than the reservation-type advertisement, the promotion-type advertisement, and the house-type advertisement. The roadblock-type advertisement may be a type of advertisement used to rapidly increase brand awareness by exclusively occupying an advertisement area, or used during a period when a specific product is launched and intensively promoted.

In an embodiment, for the roadblock-type advertisement, the same advertisement may be repeatedly output without a limit on the number of times during a given period.

In an embodiment, the roadblock-type advertisement may have different unit prices depending on an advertisement time, an advertisement playback duration, an advertisement condition, or an advertiser. In this case, the electronic device 100 may preferentially output an advertisement having a higher unit price.

In an embodiment of the present disclosure, the reservation-type advertisement may be a type in which an advertisement of an advertiser scheduled for a specific period is output a predetermined number of times. The reservation-type advertisement may differ from the roadblock-type advertisement in that it has a maximum number of outputs (frequency cap).

In an embodiment of the present disclosure, the promotion-type advertisement may be a free advertisement provided as a service to an advertiser. For example, if 1 million advertisement outputs are promised to an advertiser for a predetermined period but only 800,000 advertisement outputs are provided, the promotion-type advertisement may be a type of advertisement in which the advertisement of the corresponding advertiser is additionally provided in excess of 1 million times.

In an embodiment of the present disclosure, the House type advertisement may be an in-house advertisement output by an owner of an advertisement area. In an embodiment, the electronic device 100 may output the House type advertisement when there is no contracted advertisement. For example, when there is no contracted advertisement, the electronic device 100 may output, as an advertisement, a specific channel operating a service on Samsung TV Plus itself.

In an embodiment, when a set refresh time is reached or an expiration time of a prefetched advertisement is reached, the electronic device 100 may output the House type advertisement until a new advertisement list is stored.

In an embodiment, the electronic device 100 may output the House type advertisement when a network is not connected due to a communication failure or the like.

In the present disclosure, the advertisement type is not limited to the above-described four types. For example, there may be a special type of advertisement having a high unit price when an advertisement is output at a specific time or at a time after a specific program ends.

In an embodiment, an advertisement for a sports drink or an advertisement featuring a famous soccer player, when output at a time after an A-match soccer game ends, may have a higher unit price than a roadblock-type advertisement.

In an embodiment, an advertisement output during halftime of various sports games, including a Super Bowl game, is a special type of advertisement and may have a higher unit price than a roadblock-type advertisement.

In an embodiment of the present disclosure, when a time of obtaining an advertisement from the server 200 is a time when a special type of advertisement is available, the electronic device 100 may obtain, from the server 200, a special type of advertisement having the highest unit price.

In an embodiment of the present disclosure, the at least one advertisement obtained from the server 200 may include all advertisements belonging to an advertisement type having the highest unit price among advertisements outputtable at the time of obtaining the at least one advertisement. The server 200 may transmit, to the electronic device 100, all advertisements belonging to the roadblock-type, which is the type of advertisement having the highest unit price, among advertisements outputtable at a time of an advertisement request of the electronic device 100.

In an embodiment of the present disclosure, the electronic device 100 may store all of the obtained advertisements belonging to the roadblock-type as an advertisement list, and each time an application corresponding to an output of a screen including an advertisement area is executed, may output the advertisements sequentially starting from an advertisement having the highest unit price.

In an embodiment of the present disclosure, the at least one advertisement obtained from the server 200 may include a set of advertisements obtained using a neural network trained to output a set of advertisements that generate the largest advertisement revenue during an available advertisement output time based on an advertisement type, an advertisement unit price, an advertisement output time, whether repeated output of an advertisement is possible, and the available advertisement output time.

For example, instead of simply outputting an advertisement with the highest unit price, the electronic device 100 may predict or determine a total time during which advertisements can be output, and when a higher unit price can be obtained than when outputting one advertisement, may output a plurality of advertisements during a corresponding advertisement time.

For example, when a total time during which advertisements can be output is 5 minutes, the electronic device 100 may compare revenue generated when outputting one 5-minute advertisement having an advertisement unit price of $4 with revenue generated when outputting one 2-minute advertisement having an advertisement unit price of $2 and one 3-minute advertisement having an advertisement unit price of $3, and then select to output the one 2-minute advertisement having the unit price of $2 and the one 3-minute advertisement having the unit price of $3. Details thereof are described below.

In an embodiment of the present disclosure, when reception is interrupted due to a network problem while receiving at least one advertisement from the server 200, the electronic device 100 may maintain previously stored advertisements without deleting them and update the advertisement list when the network is reconnected.

According to an embodiment of the present disclosure, when reception is interrupted due to a network problem while receiving at least one advertisement from the server 200, the electronic device 100 may output an advertisement by using a previously stored advertisement list.

In the present disclosure, a peak time may refer to a time slot in which advertisement viewership is predicted to be highest or a time slot in which advertisement revenue is predicted to be highest.

In an embodiment of the present disclosure, the peak time may be predicted based on viewership obtained from a viewership survey company such as Nielsen.

In an embodiment of the present disclosure, the peak time may be obtained through a neural network trained based on execution history information of an application corresponding to an output of a screen including an advertisement area. Details thereof are described below.

In the present disclosure, a refresh time may refer to a time required to update an advertisement list by deleting a stored advertisement list and newly obtaining an advertisement list from the server 200.

In an embodiment of the present disclosure, the refresh time may be set based on a time predicted as a peak time.

For example, the refresh time may occur a predetermined time period before the time predicted as the peak time. For example, the refresh time may be set to 10 minutes before the time predicted as the peak time.

In an embodiment of the present disclosure, the electronic device 100 may always check whether the set refresh time is reached. When the refresh time is reached, the electronic device 100 may transmit an advertisement request to the server 200 and obtain at least one advertisement from the server 200 to thereby update the advertisement list. By updating the advertisement list immediately before the peak time, the electronic device 100 may control an advertisement having the highest unit price to be output.

In an embodiment of the present disclosure, when the set refresh time is reached, the electronic device 100 may transmit an advertisement request to the server 200 and obtain at least one advertisement from the server 200 to thereby update the advertisement list, even if a prefetched advertisement has not been output.

According to an embodiment of the present disclosure, the electronic device 100 may transmit, to an application corresponding to an output of a screen including an advertisement area, data corresponding to a first advertisement identified from the advertisement list based on an advertisement unit price (S420).

The advertisement module 150 may select an advertisement having the highest unit price from among the at least one advertisement obtained from the server 200, and prefetch the selected advertisement to the application 300 so that the advertisement may be output without delay when the application 300 corresponding to an output of a screen including an advertisement area is executed.

According to an embodiment of the present disclosure, when the application is executed, the electronic device 100 may output the first advertisement based on the data corresponding to the first advertisement (S430).

When the application corresponding to the output of the screen including the advertisement area is executed, the electronic device 100 may output the prefetched advertisement without delay.

According to an embodiment of the present disclosure, after the advertisement is output, the electronic device 100 may transmit, to the server 200, an advertisement request based on the output, and update the advertisement list again by obtaining at least one advertisement from the server 200.

The electronic device 100 may provide output information of the first advertisement to the server 200, thereby enabling the server 200 to determine whether to repeatedly output the first advertisement or to output an advertisement having a high unit price among other advertisements excluding the first advertisement.

That is, the advertisement request based on the output may be a request that, by providing output information of the advertisement to the server 200, enables the server 200 to determine whether to repeatedly output the previously output advertisement or to output an advertisement having a high unit price among other advertisements excluding the previously output advertisement in consideration of whether the advertisement has been previously output,, the number of outputs thereof, etc.

In an embodiment of the present disclosure, when the advertisement output is completed, the application 300 may transmit advertisement output information to the advertisement module 150.

In an embodiment of the present disclosure, the advertisement module 150 may transmit the advertisement output information to the server 200.

In an embodiment of the present disclosure, the advertisement module 150 may transmit the advertisement output information to the server 200 together with the advertisement request.

In an embodiment of the present disclosure, based on the received advertisement output information, the server 200 may transmit, to the electronic device 100, an advertisement having the highest unit price among advertisements outputtable at a time of the advertisement request of the electronic device 100, by considering whether an advertisement has been previously output, the number of outputs thereof, whether repeated output of the previously output advertisement is possible, the number of times the previously output advertisement may be repeatedly output, etc. If repeated output of the previously output advertisement is possible, there is a remaining number of times the previously output advertisement may be repeatedly output, and the previously output advertisement is still an advertisement having the highest unit price among advertisements outputtable at the time of the advertisement request of the electronic device 100, the server 200 may transmit the previously output advertisement to the electronic device 100 again. In this case, the advertisement transmitted to the electronic device 100 may be an advertisement of the same version as the previously output advertisement or an updated version of the corresponding advertisement.

If repeated output of the previously output advertisement is not possible, there is no remaining number of times the previously output advertisement may be repeatedly output, or the previously output advertisement is not an advertisement having the highest unit price among advertisements outputtable at the time of the advertisement request of the electronic device 100, the server 200 may transmit an advertisement other than the previously output advertisement to the electronic device 100.

In an embodiment of the present disclosure, the electronic device 100 may obtain an advertisement having the highest unit price for each advertisement type and then preferentially output a first advertisement of a type having the highest unit price. After outputting the first advertisement of the type having the highest unit price, when an advertisement output time remains, the electronic device 100 may output a second advertisement having a second highest unit price among advertisements of types other than a type of the previously output advertisement.

In an embodiment of the present disclosure, the electronic device 100 may repeatedly output a roadblock-type advertisement having the highest unit price during an available advertisement output time.

In an embodiment, the first advertisement having the highest unit price may be a roadblock-type advertisement, and the second advertisement having a high unit price, among advertisements of types other than a type of the previously output advertisement, i.e., the roadblock-type advertisement, may be a reservation-type advertisement.

In an embodiment, the electronic device 100 may output a roadblock-type advertisement during an available advertisement output time, and when an available advertisement output time of the roadblock-type advertisement expires, the electronic device 100 may output a reservation-type advertisement from the advertisement list during a remaining available advertisement output time.

In an embodiment, when the roadblock-type advertisement and the reservation-type advertisement cannot be output, the electronic device 100 may output a promotion-type advertisement from among the advertisement list.

In an embodiment, when the roadblock-type advertisement, the reservation-type advertisement, and the promotion-type advertisement cannot be output, the electronic device 100 may output a house-type advertisement from among the advertisement list.

In an embodiment of the present disclosure, when the roadblock-type advertisement, when an application corresponding to an output of a screen including an advertising area is executed, the electronic device 100 may output an advertisement having a high unit price from among the advertisement list obtained from the server 200.

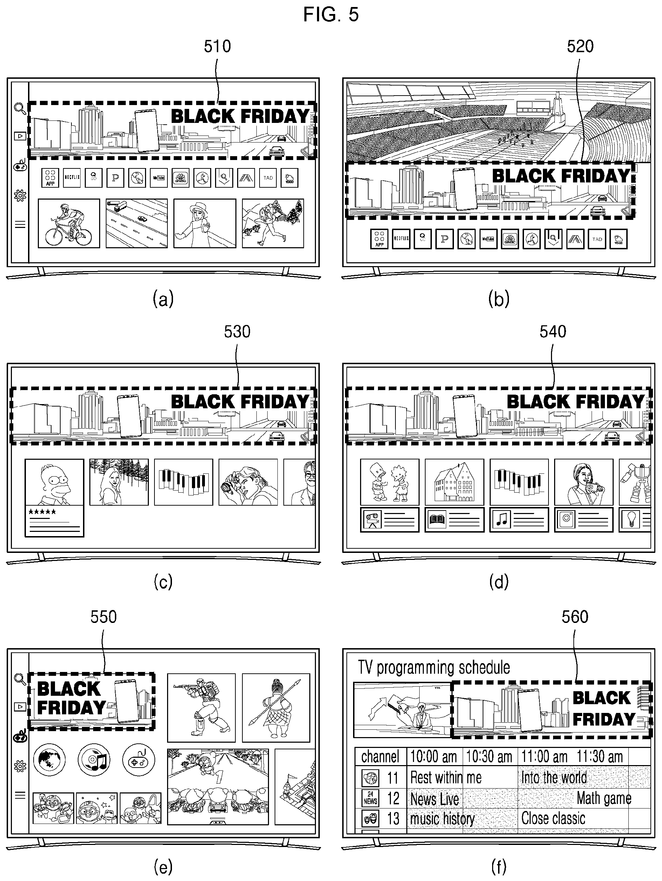

FIG. 5 is a diagram illustrating an example of an application corresponding to an output of a screen including an advertisement area, according to an embodiment of the present disclosure.

In an embodiment of the present disclosure, the electronic device 100 may output an advertisement through an application corresponding to an output of a screen including an advertisement area.

The application corresponding to the output of the screen including the advertisement area may be of various types.

The application corresponding to the output of the screen including the advertisement area may have advertisement areas of various sizes.
(a) of FIG. 5 may be a screen of a content integration service or a media home executed when an input for a home button is received. The screen of the content integration service may include an advertisement area 510.
(b) of FIG. 5 may be a screen on which the electronic device 100 displays recommended applications. The screen of (b) of FIG. 5 may include an advertisement area 520.
(c) of FIG. 5 may be an application screen on which the electronic device 100 displays recommended content. The screen of (c) of FIG. 5 may include an advertisement area 530.
(d) of FIG. 5 may be an application store screen displaying applications installable on the electronic device 100. The screen of (d) of FIG. 5 may include an advertisement area 540.
(e) of FIG. 5 may be an initial screen of a game channel provided by the electronic device 100. The screen of (e) of FIG. 5 may include an advertisement area 550.
(f) of FIG. 5 may be an application screen providing a TV schedule provided by the electronic device 100. The screen of (f) of FIG. 5 may include an advertisement area 560.

The application screens of FIG. 5 are merely examples, and an application capable of outputting an advertisement is not limited thereto.

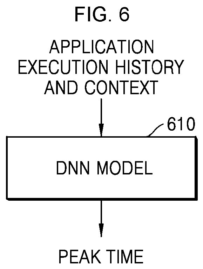

FIG. 6 is a diagram illustrating an example of a method, performed by an electronic device, of predicting a peak time by using artificial intelligence (AI), according to an embodiment of the present disclosure.

According to an embodiment of the present disclosure, the electronic device 100 may predict a peak time by using a neural network trained to receive, as an input, execution history information of an application corresponding to an output of a screen including an advertisement area, and to output a peak time.

According to an embodiment of the present disclosure, the electronic device 100 may obtain a prediction of the peak time by using a neural network trained to receive, as inputs, context information and execution history information of an application corresponding to an output of a screen including an advertisement area, and to output a peak time.

AI is a computer system that implements human-level intelligence, enabling machines to learn and make decisions on their own, with recognition rates improving as use increases. AI technology is composed of machine learning (deep learning) technology that uses algorithms for classifying/learning the characteristics of input data on their own, and element technologies that simulate functions of a human brain such as cognition, decision-making, etc. by utilizing machine learning algorithms.

The element technologies may include, for example, at least one of linguistic understanding technology for recognizing human language/characters, visual understanding technology for recognizing objects in a manner similar to human vision, inference/prediction technology for analyzing information and making logical inferences and predictions, knowledge representation technology for processing human experience information into knowledge data, and motion control technology for controlling autonomous driving of vehicles and movements of robots.

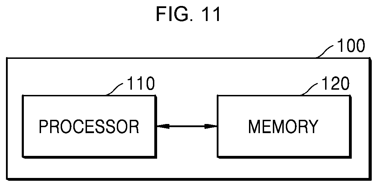

Ai related functions according to the present disclosure may be operated through a processor 110 and memory 120 of FIG. 11. The processor 110 may include one or a plurality of processors. In this case, the one or plurality of processors may be general-purpose processors such as central processing units (CPUs), application processors (APs), and digital signal processors (DSPs), dedicated graphics processors such as graphics processing unit (GPUs) and vision processing units (VPUs), or dedicated AI processors such as neural processing units (NPUs). The one or the plurality of processors 110 control input data to be processed according to predefined operation rules or AI model stored in the memory 120. Alternatively, when the one or plurality of processors 110 are dedicated AI processors, the dedicated AI processors may be designed with a hardware structure specialized for processing a particular AI model.

The predefined operation rules or AI model are created through a training process. In this case, creation through the training process means that the predefined operation rules or AI model set to perform desired characteristics (or purposes) are created by training a base AI model based on a large number of training data via a learning algorithm. The training process may be performed by the electronic device 100 itself on which AI according to the present disclosure is performed, or via a separate server and/or system. Examples of a learning algorithm may include, but are not limited to, supervised learning, unsupervised learning, semi-supervised learning, and reinforcement learning.

An AI model may consist of a plurality of neural network layers. Each of the plurality of neural network layers has a plurality of weight values and performs a neural network operation via computations between a result of an operation in a previous layer and the plurality of weight values. The plurality of weight values assigned to each of the plurality of neural network layers may be optimized by a result of training the AI model. For example, the plurality of weight values may be updated to reduce or minimize a loss or cost value obtained in the AI model during a training process.

In an embodiment using a deep learning algorithm, the processor 110 may obtain a prediction of a peak time by using a pre-trained deep neural network (DNN) model 610.

The pre-trained DNN model 610 may be an AI model trained through learning to receive, as an input, execution history information of an application corresponding to an output of a screen including an advertisement area and to output a peak time as an output value.

The DNN model may be, for example, a convolutional neural network (CNN) model. However, the DNN model 610 is not limited thereto, and may be a known AI model including at least one of a recurrent neural network (RNN) model, a restricted Boltzmann machine (RBM), a Deep Belief Network (DBN), a bidirectional recurrent DNN (BRDNN), and a Deep Q-Network (DQN).

The electronic device 100 may predict a peak time by applying various machine learning algorithms to execution history information of an application corresponding to an output of the screen including an advertisement area.

In an embodiment, the peak time may be predicted on a day-of-the-week basis.

In an embodiment, the peak time may be predicted on a monthly or seasonal basis.

In an embodiment, the peak time may be predicted according to various other criteria.

In the embodiment of FIG. 6, although prediction of the peak time is described as being performed by the electronic device 100, the prediction also be performed by the server 200.

In an embodiment, the server 200 may predict the peak time by using AI in the same manner as in the embodiment of FIG. 6.

In an embodiment, when a new advertisement having a higher advertisement unit price is generated, the server 200 may set a refresh time to a time that occurs a predetermined time period before an available output time of the corresponding advertisement and transmit the advertisement to the electronic device 100.

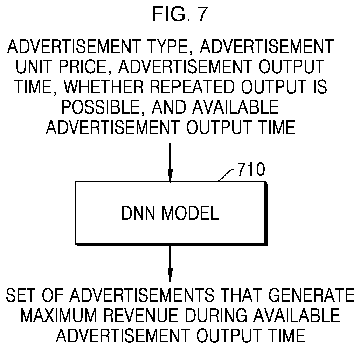

FIG. 7 is a diagram illustrating an example of a method, performed by an electronic device, of obtaining a set of advertisements that generate maximum advertisement revenue during an available advertisement output time by using AI, according to an embodiment of the present disclosure.

The electronic device 100 may obtain a set of advertisements that generate the largest advertisement revenue during an available advertisement output time by using a neural network trained to receive, as inputs, an advertisement type, an advertisement unit price, an advertisement output time, whether repeated output of an advertisement is possible, and an available advertisement output time, and to output a set of advertisements that generate the largest advertisement revenue during the available advertisement output time.

According to an embodiment of the present disclosure, the electronic device 100 may internally store metadata information for each advertisement and all advertisements.

In an embodiment, when an advertisement image is updated by an advertiser, the server 200 may perform a minimum role of receiving the updated advertisement image and updating it for the electronic device 100.

According to an embodiment, even when the advertisement image is updated by the advertiser, the electronic device 100 may directly receive an updated advertisement image without passing through the server 200. In this case, advertisement output may be performed only by the electronic device 100 without the server 200.

According to an embodiment of the present disclosure, the electronic device 100 may request, from the server 200, advertisements included in the obtained set of advertisements, and may receive or obtain the advertisements corresponding to the set of advertisements from the server 200.

Repeated descriptions regarding AI with respect to FIG. 6 will be omitted.

In an embodiment using a deep learning algorithm, the processor 110 of FIG. 11 may obtain a set of advertisements that generate the largest advertisement revenue during an available advertisement output time by using a pre-trained DNN model 710. The pre-trained deep neural network model 710 may be an AI model trained through learning to receive, as input values, an advertisement type, an advertisement unit price, an advertisement output time, whether repeated output of an advertisement is possible, and an available advertisement output time, and to output, as an output value, a set of advertisements that generate the largest advertisement revenue during the available advertisement output time.

The DNN model may be, for example, a convolutional neural network (CNN) model. However, the DNN model 710 is not limited thereto, and may be a known AI model including at least one of an RNN model, an RBM, a DBN, a BRDNN, and a DQN.

In an embodiment of the present disclosure, an AI model such as that in FIG. 7 may exist in the server 200. In this case, the server 200 may transmit, to the electronic device 100, a set of advertisements that generate the largest advertisement revenue during an available advertisement output time, according to an output value of the AI model.

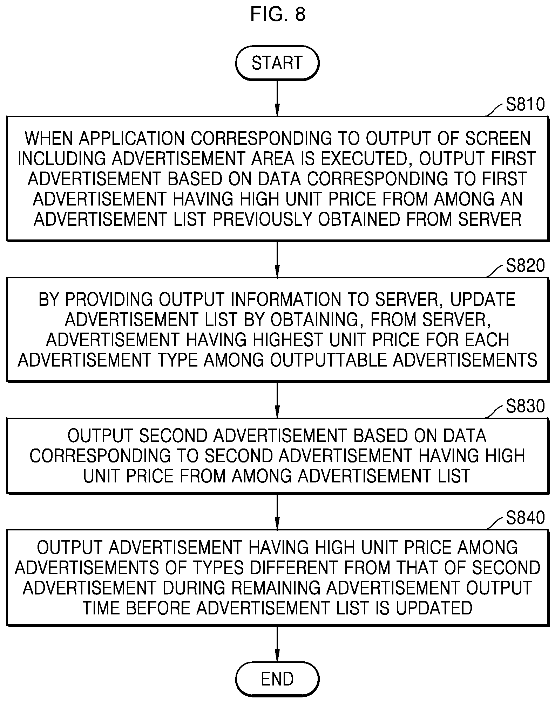

FIG. 8 is a flowchart of an operating method of an electronic device, according to an embodiment of the present disclosure.

Referring to FIG. 8, according to an embodiment of the present disclosure, when an application corresponding to an output of a screen including an advertisement area is executed, the electronic device 100 may output a first advertisement based on data corresponding to the first advertisement having a high unit price from among an advertisement list previously obtained from the server (S810).

According to an embodiment of the present disclosure, the electronic device 100 may transmit an advertisement request to the server 200, obtain at least one advertisement from the server 200, and store the obtained at least one advertisement as an advertisement list.

In an embodiment, the server 200 may transmit at least one advertisement to the electronic device 100 in response to receiving the advertisement request from the electronic device 100.

The electronic device 100 may select an advertisement having the highest unit price from among the received at least one advertisement, and prefetch the selected advertisement to the application 300 so that the advertisement may be output without delay when the application 300 corresponding to an output of a screen including an advertisement area is executed.

When the application corresponding to the output of the screen including the advertisement area is executed, the electronic device 100 may output the prefetched advertisement without delay.

According to an embodiment of the present disclosure, by providing output information to the server, the electronic device 100 may update an advertisement list by obtaining, from the server, an advertisement having the highest unit price for each advertisement type among outputtable advertisements (S820).

Regarding operation S820, repeated descriptions with respect to operation S410 of FIG. 4 may be omitted.

The electronic device 100 may provide output information of the first advertisement to the server 200. The output information of the first advertisement may include information on a time when the first advertisement is output and a cumulative number of outputs of the first advertisement.

In an embodiment of the present disclosure, based on the output information of the first advertisement, the server 200 may, obtain an advertisement having the highest unit price for each advertisement type among outputtable advertisements and transmit the advertisements to the electronic device 100. When repeated output of the first advertisement is possible, the server 200 may obtain an advertisement having the highest unit price for each advertisement type from among all advertisements including the first advertisement and transmit the advertisements to the electronic device 100. In this case, if the first advertisement still has the highest unit price in the corresponding type, the server 200 may transmit the first advertisement to the electronic device 100. When repeated output of the first advertisement is not possible, the server 200 may transmit, to the electronic device 100, an advertisement having a high unit price among other advertisements excluding the first advertisement.

In an embodiment of the present disclosure, based on the output information of the first advertisement, the electronic device 100 may control the server 200 to transmit, to the electronic device 100, an advertisement having the highest unit price for each advertisement type among currently outputtable advertisements.

In an embodiment of the present disclosure, based on the output information of the first advertisement, the electronic device 100 may determine an advertisement having the highest unit price for each advertisement type from among currently outputtable advertisements, and then transmit a transmission request for each determined advertisement to the server 200. That is, an entity that determines the advertisements having the highest unit price for each advertisement type may be the electronic device 100 or the server 200.

In an embodiment, the electronic device 100 may control the server 200 to transmit each determined advertisement to the electronic device 100.

An advertisement request based on an output may be a request that, by providing output information of the advertisement to the server 200, enables the server 200 to determine whether to repeatedly output the previously output advertisement or to output an advertisement having a high unit price among other advertisements excluding the previously output advertisement, in consideration of whether the advertisement has been previously output, the number of outputs thereof, etc.

In an embodiment of the present disclosure, when the advertisement output is completed, the application 300 may transmit advertisement output information to the advertisement module 150.

In an embodiment of the present disclosure, the advertisement module 150 may transmit the advertisement output information to the server 200.

In an embodiment of the present disclosure, the advertisement module 150 may transmit the advertisement output information to the server 200 together with an advertisement request. When requesting an advertisement from the server 200, the advertisement module 150 may transmit the advertisement output information to the server 200.

In an embodiment of the present disclosure, based on the received advertisement output information, the server 200 may transmit, to the electronic device 100, an advertisement having the highest unit price among advertisements outputtable at a time of the advertisement request of the electronic device 100, by considering whether an advertisement has been previously output, the number of outputs thereof, whether repeated output of the previously output advertisement is possible, the number of times the previously output advertisement may be repeatedly output, etc.

If repeated output of the previously output advertisement is possible, there is a remaining number of times the previously output advertisement may be repeatedly output, and the previously output advertisement is still an advertisement having the highest unit price among advertisements outputtable at the time of the advertisement request of the electronic device 100, the server 200 may transmit the previously output advertisement again to the electronic device 100. In this case, the advertisement transmitted to the electronic device 100 may be the same advertisement as the previously output advertisement or an updated version of the corresponding advertisement.

In an embodiment of the present disclosure, the at least one advertisement obtained from the server 200 may include an advertisement having the highest unit price for each advertisement type among advertisements outputtable at a time of obtaining the at least one advertisement. The server 200 may transmit, to the electronic device 100, one advertisement having the highest unit price for each advertisement type among advertisements outputtable at the time of the advertisement request of the electronic device 100.

In an embodiment, the server 200 may transmit, to the electronic device 100, one advertisement having the highest unit price among roadblock-type advertisements, one advertisement having the highest unit price among reservation-type advertisements, one advertisement having the highest unit price among promotion-type advertisements, and one house-type advertisement.

In an embodiment, when there are multiple advertisements having the same unit price, the server 200 may select one according to a predetermined rule and transmit the selected advertisement to the electronic device 100.

In an embodiment, when there are multiple advertisements having the same unit price, the server 200 may randomly select one and transmit the selected advertisement to the electronic device 100.

In an embodiment, when there are multiple advertisements having the same unit price, the server 200 may select one by considering the number of outputs, output timing, output conditions, and the like for each advertisement, and transmit the selected advertisement to the electronic device 100.

In an embodiment of the present disclosure, an entity that determines an advertisement to be transmitted to the electronic device 100 may be the electronic device 100 instead of the server 200. In this case, the electronic device 100 may determine each advertisement to be transmitted from the server 200 and request the determined advertisements from the server 200.

In the present disclosure, an advertisement having the highest unit price may refer to an advertisement that contributes most to revenue generation by considering all relevant factors such as an advertisement unit price and advertisement conditions.

According to an embodiment of the present disclosure, the electronic device 100 may output a second advertisement based on data corresponding to the second advertisement having a high unit price from among the advertisement list (S830).

In an embodiment of the present disclosure, the electronic device 100 may obtain an advertisement having the highest unit price for each advertisement type and preferentially output the second advertisement having the highest unit price among the obtained advertisements.

According to an embodiment of the present disclosure, during a remaining advertisement output time before the advertisement list is updated, the electronic device 100 may output an advertisement having a high unit price among advertisements of types different from that of the second advertisement (S840).

In an embodiment, after outputting an advertisement of a type having the highest unit price, if advertisement output time remains, the electronic device 100 may output an advertisement having a high unit price among advertisements of types other than the previously output advertisement type.

In an embodiment, the second advertisement having the highest unit price may be a roadblock-type advertisement, and an advertisement having a high unit price among advertisements of types other than a type of the previously output advertisement, i.e., the roadblock-type advertisement, may be a reservation-type advertisement.

The electronic device 100 may output a roadblock-type advertisement during an available advertisement output time, and when an available advertisement output time of the roadblock-type advertisement expires, the electronic device 100 may output a reservation-type advertisement from the advertisement list during a remaining available advertisement output time.

In an embodiment, when output of the roadblock-type advertisement and the reservation-type advertisement is not possible, the electronic device 100 may output a promotion-type advertisement from among the advertisement list.

In an embodiment, when the roadblock-type advertisement, the reservation-type advertisement, and the promotion-type advertisement cannot be output, the electronic device 100 may output a house- type advertisement from among the advertisement list.

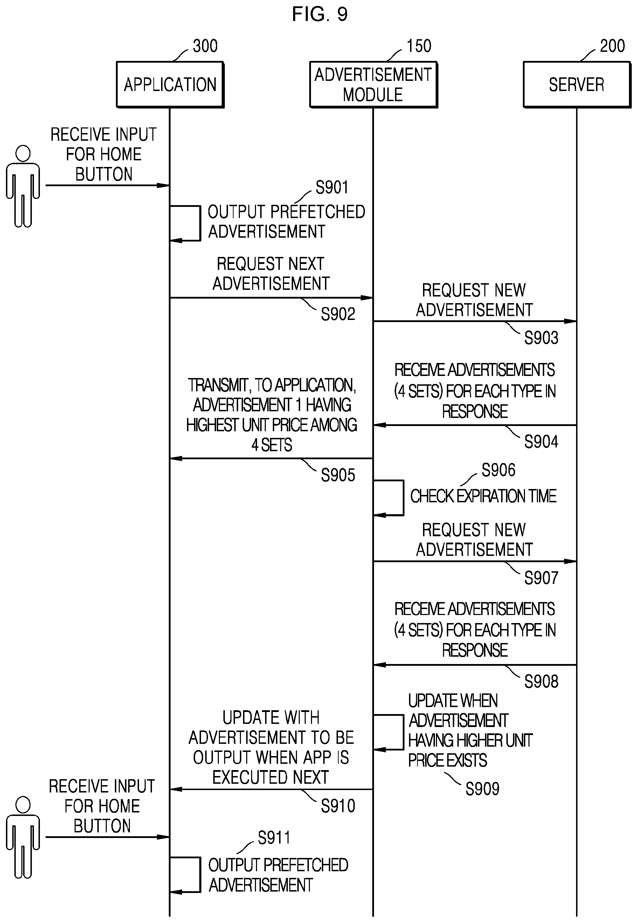

FIG. 9 is a diagram illustrating an example in which an electronic device obtains and outputs an advertisement, according to an embodiment of the present disclosure.

According to an embodiment of the present disclosure, when an input for a home button is received, the electronic device 100 of FIG. 9 may execute the application 300 and simultaneously output a prefetched advertisement (S901). Furthermore, after the advertisement is output, the application 300 may request a next advertisement from the advertisement module 150 (S902), and the advertisement module 150 may request an advertisement from the server 200 (S903).

In response to receiving the advertisement request, the server 200 may transmit one advertisement for each advertisement type to the advertisement module 150 (S904).

In an embodiment, the electronic device 100 may control the server 200 to transmit, for each advertisement type, one advertisement having the highest unit price.

In an embodiment, there may be four advertisement types, and in this case, a total of four advertisements, one having the highest unit price for each type, may be transmitted from the server 200 to the advertisement module 150. Details regarding advertisement types are described below.

The advertisement module 150 may select advertisement 1 belonging to a type having the highest unit price from among the received advertisements, and prefetch the selected advertisement 1 to the application 300 so that the advertisement 1 may be output without delay when the application 300 is executed next (S905).

However, because it is difficult to predict a time when a prefetched advertisement is output as a user executes an application, an available advertisement output time among output conditions of the prefetched advertisement may expire before the prefetched advertisement is output. In this case, the electronic device 100 may not be able to output the prefetched advertisement even when the application 300 is executed.

Accordingly, the electronic device 100 may check whether an expiration time of the prefetched advertisement has been reached (S906).

In the present disclosure, the expiration time may refer to a time during which the electronic device 100 is able to output each advertisement stored in an advertisement list.

In an embodiment, an entity that checks whether the expiration time of the prefetched advertisement has been reached may be the advertisement module 150 of the electronic device 100.

In an embodiment, when obtaining an advertisement from the server 200, the electronic device 100 may check and store an expiration time of the advertisement.

In an embodiment, the expiration time may be set to a predetermined time. For example, the expiration time may be set to 12 hours after the advertisement is received.

In an embodiment, the electronic device 100 may periodically check whether the expiration time of the prefetched advertisement has been reached.

In an embodiment, the electronic device 100 may check in real time in a background operation whether the expiration time of the prefetched advertisement has been reached.

In an embodiment, when the expiration time of the prefetched advertisement has been reached, the electronic device 100 may request a new advertisement from the server 200 regardless of whether the prefetched advertisement has been output (S907).

In an embodiment, as shown in FIG. 3, the electronic device 100 may check whether a refresh time has been reached before the prefetched advertisement is output.

When the refresh time is reached, the advertisement module 150 may request an advertisement from the server 200 regardless of whether the prefetched advertisement has been output.

While the embodiment of FIG. 9 illustrates that the electronic device 100 checks only whether the expiration time of the prefetched advertisement has been reached and FIG. 3 illustrates that the electronic device 100 checks only whether the refresh time of the prefetched advertisement has been reached, in an embodiment, the electronic device 100 may check both whether the expiration time of the prefetched advertisement has been reached and whether the refresh time of the prefetched advertisement has been reached.

In an embodiment, the electronic device 100 may simultaneously check whether the expiration time of the prefetched advertisement has been reached and whether the refresh time of the prefetched advertisement has been reached.

In response to receiving the advertisement request, the server 200 may transmit, to the advertisement module 150, one advertisement having the highest unit price for each advertisement type among advertisements toutputtable at a time when the advertisement request is received (S908).

In an embodiment, when four advertisement types exist, the server 200 may transmit a total of four advertisements, one for each type, to the advertisement module 150.

When an advertisement having a higher unit price than an advertisement included in a previously stored advertisement list is received, the advertisement module 150 may update the advertisement list with the advertisement having the higher unit price (S909).

The advertisement module 150 may select an advertisement belonging to a type having the highest unit price from among the stored advertisement list, and prefetch the selected advertisement to the application 300 so that the advertisement may be output without delay when the application 300 is executed next (S910).

Thereafter, when an input for the home button is received again by the user, the electronic device 100 may execute the application 300 and simultaneously output the prefetched advertisement (S911).

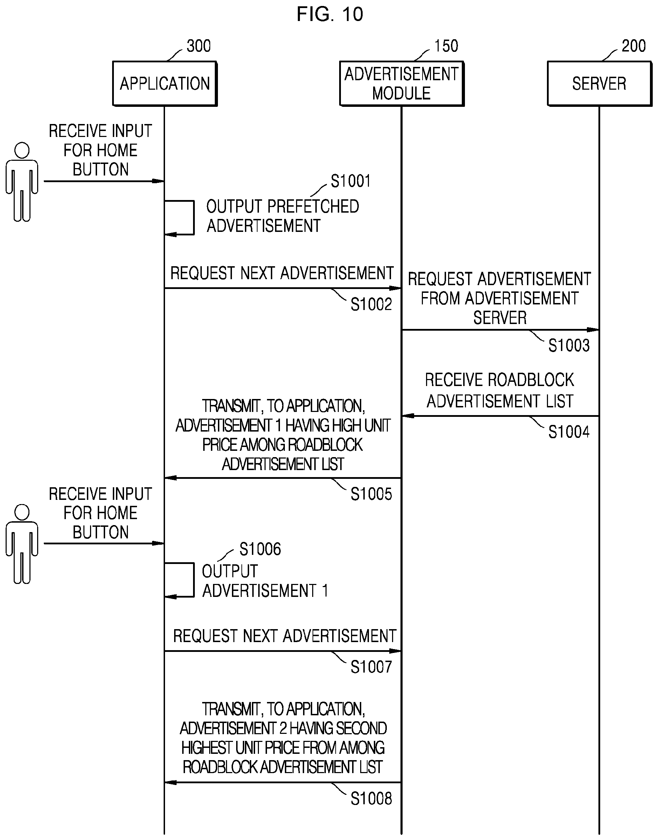

FIG. 10 is a diagram illustrating an example in which an electronic device obtains and outputs an advertisement, according to an embodiment of the present disclosure.

According to an embodiment of the present disclosure, when an input for a home button is received, the electronic device 100 of FIG. 10 may execute the application 300 and simultaneously output a prefetched advertisement (S1001). Furthermore, after the advertisement is output, the application 300 may request a next advertisement from the advertisement module 150 (S1002), and the advertisement module 150 may request an advertisement from the server 200 (S1003).

In response to receiving the advertisement request, the server 200 may transmit, to the advertisement module 150, all outputtable advertisements belonging to an advertisement type having the highest unit price among advertisement types (S1004).

In an embodiment, the advertisement type having the highest unit price among the advertisement types may be a roadblock-type advertisement.

In an embodiment, the server 200 may transmit, to the advertisement module 150 or the electronic device 100, all advertisements that belong to the roadblock-type advertisement and are outputtable at a time when the advertisement request is received from the advertisement module 150.

The advertisement module 150 may select advertisement 1 having the highest unit price from among the received advertisements, and prefetch the selected advertisement 1 to the application 300 so that the advertisement 1 may be output without delay when the application 300 is executed next (S1005).

Thereafter, when an input for the home button is received again by the user, the electronic device 100 may execute the application 300 and simultaneously output the prefetched advertisement 1 (S1006).

In addition, after the advertisement 1 is output, the application 300 may request a next advertisement from the advertisement module 150 (S1007), and the advertisement module 150 may select advertisement 2 having a second highest unit price after the advertisement 1 among advertisements included in a stored advertisement list and prefetch the advertisement 2 to the application 300 so that the advertisement 2 may be output without delay when the application 300 is executed next (S1008).

In the embodiment of FIG. 10, after the advertisement 1 is output, the advertisement module 150 may prefetch, to the application 300, an advertisement to be output next by using advertisements stored in the advertisement list obtained in operation S1004, without requesting an advertisement from the server 200.

Thereafter, when an input for the home button is received again by the user, the electronic device 100 may execute the application 300 and simultaneously output the prefetched advertisement 2.

FIG. 11 is block diagram of a configuration of an electronic device according to an embodiment of the present disclosure.

Referring to FIG. 11, the electronic device 100 may include the processor 110 and the memory 120.

The memory 120 may store programs necessary for processing or control by the processor 110. In addition, the memory 120 may store data input to or output from the electronic device 100.

The memory 120 may include at least one of internal memory (not shown) and external memory (not shown).

The memory 120 may include at least one type of storage medium among a flash memory-type memory, a hard disk-type memory, a multimedia card micro-type memory, a card-type memory (e.g., a Secure Digital (SD) or eXtreme Digital (xD) memory), random access memory (RAM), static RAM (SRAM), read-only memory (ROM), electrically erasable programmable ROM (EEPROM), PROM, magnetic memory, a magnetic disc, and an optical disc.

The internal memory may include, for example, at least one of volatile memory (e.g., dynamic RAM (DRAM), SRAM, synchronous dynamic RAM (SDRAM), etc.), non-volatile memory (e.g., one time PROM (OTPROM), PROM, erasable and programmable ROM (EPROM), EEPROM, mask ROM, flash ROM, etc.), a hard disk drive (HDD), or a solid state drive (SSD).

According to an embodiment, the processor 110 may load instructions or data received from at least one of non-volatile memory or other components into volatile memory for processing. In addition, the processor 110 may retain, in non-volatile memory, data received from or generated by other components.

The external memory may include, for example, at least one of Compact Flash (CF), SD, micro-SD, mini-SD, xD, or Memory Stick.

The memory 120 may store one or more instructions that are executable by the processor 110.

In an embodiment of the disclosure, the memory 120 may store various pieces of information input via an input/output (I/O) interface (not shown).

In an embodiment of the present disclosure, the memory 120 may store at least one of instructions, algorithms, data structures, program code, or application programs readable by the processor 110. The instructions, algorithms, data structures, and program code stored in the memory 120 may be implemented in programming or scripting languages such as C, C++, Java, assembler, etc.

In an embodiment, the memory 120 may store instructions for controlling the processor 110 to, when an application corresponding to an output of a screen including an advertisement area is executed, output a first advertisement having a high unit price from an advertisement list previously obtained from the server 200, transmit, to the server 200, an advertisement request based on the output, update the advertisement list by obtaining at least one advertisement from the server 200, and when a refresh time set based on a peak time predicted to have high advertisement revenue is reached, transmit an advertisement request to the server 200 and update the advertisement list by obtaining at least one advertisement from the server 200.

The processor 110 may execute an operating system (OS) and various applications stored in the memory 120 when there is a user input or a preset stored condition is satisfied.

The processor 110 may include a RAM that stores signals or data input from outside the electronic device 100 or is used as a storage area corresponding to various operations performed by the electronic device 100, and ROM that stores a control program for controlling the electronic device 100.

The processor 110 may include a single core, a dual core, a triple core, a quad core, or a number of cores equal to multiples thereof. Furthermore, the processor 110 may include a plurality of processors. For example, the processor 110 may be implemented as a main processor (not shown) and a sub processor (not shown) operating in a sleep mode.

In addition, the processor 110 may include at least one of a CPU, a GPU, and a VPU. Alternatively, according to an embodiment, the processor 110 may be implemented as a system on a chip (SoC) that integrates at least one of a CPU, a GPU, or a VPU.

The processor 110 may control various components of the electronic device 100 by executing one or more instructions stored in the memory 120.

In an embodiment, when an application corresponding to an output of a screen including an advertisement area is executed, the processor 110 may output a first advertisement having a high unit price from among an advertisement list previously obtained from the server 200.

In an embodiment, the processor 110 may transmit, to the server 200, an advertisement request based on the output and update the advertisement list by obtaining at least one advertisement from the server 200.

In an embodiment, when a refresh time set based on a peak time predicted to have high advertisement revenue is reached, the processor 110 may transmit an advertisement request to the server 200 and update the advertisement list by obtaining at least one advertisement from the server 200.

In an embodiment, the processor 110 may execute one or more instructions to, when an expiration time of an advertisement included in the advertisement list has passed, transmit an advertisement request to the server 200 and update the advertisement list by obtaining at least one advertisement from the server 200.

In an embodiment, the processor 110 may transmit a video signal or an audio signal output from the electronic device 100 to an external display such that the corresponding signal is output on the external display.

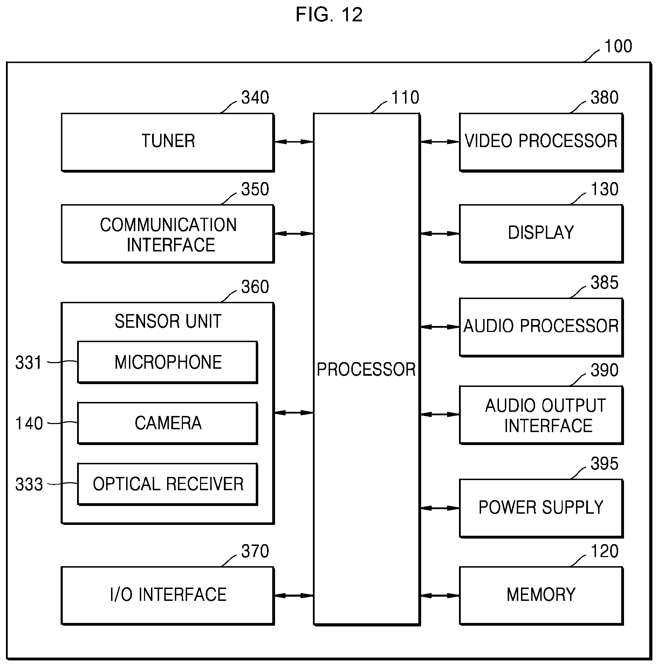

FIG. 12 is a detailed block diagram illustrating a configuration of an electronic device according to an embodiment of the present disclosure.

Referring to FIG. 12, the electronic device 100 may include a tuner 340, a processor 110, a display 320, a communication interface 350, a sensor unit 130, an I/O interface 370, a video processor 380, an audio processor 385, an audio output interface 390, memory 120, and a power supply 395.

The processor 110 in FIG. 12 is a component corresponding to the processor 110 in FIG. 11, and the memory 120 in FIG. 12 is a component corresponding to the memory 120 in FIG. 11. Therefore, descriptions already provided above with respect to FIG. 11 are omitted hereafter.

According to an embodiment, the communication interface 350 may include a Wi-Fi module, a Bluetooth module, an IR communication module, a wireless communication module, a local area network (LAN) module, an Ethernet module, a wired communication module, etc. In this case, each communication module may be implemented in the form of at least one hardware chip.

The Wi-Fi module and the Bluetooth module perform communications according to a Wi-Fi method and a Bluetooth method, respectively. When the Wi-Fi module or the Bluetooth module are used, various types of connection information such as a service set identifier (SSID) and a session key may be first transmitted and received, a communication connection may be established using the connection information, and then various types of information may be transmitted and received. The wireless communication module may include at least one communication chip for performing communication according to various communication standards such as ZigBee, 3rd generation (3G), 3rd Generation Partnership Project (3GPP), long-term evolution (LTE), LTE advanced (LTE-A), 4th generation (4G), and 5th generation (5G).

According to an embodiment, the communication interface 350 may receive a user input from an external device.

According to an embodiment, the communication interface 350 may communicate with an external device such as a server.

According to an embodiment, the communication interface 350 may include a communication interface that performs wireless communication such as Bluetooth with a server or the like, and a communication interface connected to an external device via an HDMI port or the like. In this case, the communication interface that performs wireless communication such as Bluetooth with the server, etc. may perform connection with other devices and video/audio data transmission. The communication interface connected to the external device via the HDMI port or the like may include not only an input port that receives an input, but also an output port, such as DP, HDMI, red, green, and blue (RGB), Digital Visual Interface (DVI), or Thunderbolt, for transmitting video or audio signals to an external display or speaker.

According to an embodiment, by performing amplification, mixing, resonance, etc. of a broadcast signal received in a wired or wireless manner, the tuner 340 may tune and then select only a frequency of a channel that the electronic device 100 desires to receive from among many radio wave components. The broadcast signal includes audio, video, and additional information (e.g., an electronic program guide (EPG)).

The tuner 340 may receive broadcast signals from various sources, such as terrestrial broadcasting, cable broadcasting, satellite broadcasting, and Internet broadcasting. The tuner 340 may receive a broadcast signal from a source such as analog broadcasting, digital broadcasting, or the like.

The sensor unit 130 detects sound around the electronic device 1000, images around the electronic device 1000, or interactions with the surroundings of the electronic device 1000, and may include at least one of a microphone 331, a camera 332, and an optical receiver 333. The sensor unit 130 may detect a state of the electronic device 100 or conditions around the electronic device 100, and transmit information about the detected state or conditions to the processor 110.

The microphone 331 receives a voice uttered by the user and sounds occurring around the electronic device 100. The microphone 331 may convert the received voice or sound into electrical signals and output the electrical signals to the processor 110. The microphone 331 may use various noise removal algorithms to remove noise occurring in the process of receiving external sound signals.

The camera 332 may obtain image frames, such as still images or moving images. An image captured by an image sensor may be processed by the processor 110 or a separate image processor (not shown).

An image frame processed by the camera 332 may be stored in the memory 120 or transmitted to outside via the communication interface 350. The camera 332 may include two or more cameras depending on a configuration of the electronic device 100.

The optical receiver 333 may receive an optical signal (including a control signal) received via an external remote control device (not shown). The optical receiver 333 may receive an optical signal corresponding to a user input (e.g., touching, pressing, touch gesture, voice, or motion) from a remote control device (not shown). A control signal may be extracted from the received optical signal under the control of the processor 110. For example, the optical receiver 333 may receive a control signal corresponding to a channel up/down button for changing channels from a remote control device (not shown).

The sensor unit 130 of FIG. 12 is illustrated as including the microphone 331, the camera 332, and the optical receiver 333, but is not limited thereto, and may include at least one of a magnetic sensor, an acceleration sensor, a temperature/humidity sensor, an infrared (IR) sensor, a gyroscope sensor, a position sensor (e.g., a global positioning system (GPS)), a barometric pressure sensor, a proximity sensor, an RGB sensor, an illuminance sensor, and a Wi-Fi signal receiver, without being limited thereto. Because one of ordinary skill in the art may intuitively infer a function of each sensor from its name, a detailed description thereof is omitted.

The sensor unit 130 of FIG. 12 is illustrated as being provided in the electronic device 100 itself, but is not limited thereto, and may be included in a control device, such as a remote control, which is located independently of the electronic device 100 and communicates with the electronic device 100. When the sensor unit 130 is provided in the control device of the electronic device 100, the control device may digitize information detected by the sensor unit 130 and transmit the digitized information to the electronic device 100. The control device may communicate with the electronic device 100 by using short-range communication including IR, Wi-Fi, or Bluetooth.

For example, the microphone may be included in the electronic device 100 itself, but may also be provided in the control device, such as the remote control, which is located independently of the electronic device 100 and communicates with the electronic device 100.

In an embodiment, when the microphone is included in the remote control, an analog audio signal may be received via the microphone, digitized by the remote control, and transmitted to the electronic device 100, such as a TV. In this case, the remote control may communicate with the electronic device 100 by using short-range communication including IR, Wi-Fi, or Bluetooth.

In an embodiment, the electronic device 100 may include a plurality of communication interfaces 350 capable of performing various short-range communications, including IR, Wi-Fi, or Bluetooth.

In an embodiment, the electronic device 100 may include the plurality of communication interfaces 350 including a communication interface for communicating with the server 200 and a communication interface for communicating with the remote control, which are different from each other. For example, the communication interface for communicating with the server may use an Ethernet modem, a Wi-Fi module, or the like, while the communication interface for communicating with the remote control may use a Bluetooth module.

In an embodiment, the electronic device 100 may include the communication interface 350 in which the communication interface for communicating with the server is identical to the communication interface for communicating with the remote control. For example, the communication interface for communicating with the server and the communication interface for communicating with the remote control may both use a Wi-Fi module.

In an embodiment, a device, such as a smartphone, on which a remote control application is installed may perform the same function as the remote control described above. That is, the device on which the remote control application is installed may control the electronic device 100 and perform a speech recognition function.

The device on which the remote control application may be installed is not limited to a smartphone and may include any device, such as an AI speaker, which is capable of operating by installing an application.

In an embodiment, the device on which the remote control application is installed may be capable of receiving a user's voice.

In an embodiment, the electronic device 100 may include a plurality of communication interfaces capable of implementing the above-described communication method to transmit and receive data to and from the remote control or the device on which the remote control application may be installed by using Wi-Fi, Bluetooth, infrared, or the like, and to control the remote control and the device.

Under the control of the processor 110, the I/O interface 370 receives video (e.g., a moving image, etc.), audio (e.g., voice, music, etc.), additional information (e.g., EPG, etc.) from outside the electronic device 100. The I/O interface 370 may include one of an HDMI, a Mobile High-Definition Link (MHL), a Universal Serial Bus (USB), a DP, a Thunderbolt, a Video Graphics Array (VGA) port, an RGB port, a D-subminiature (D-sub), a DVI, a component jack, and a PC port.

The video processor 380 performs processing on video data received by the electronic device 100. The video processor 380 may perform various types of image processing, such as decoding, scaling, noise reduction, frame rate conversion, resolution conversion, etc. on the video data.

The display 320 may generate a driving signal by converting an image signal, a data signal, an on-screen display (OSD) signal, a control signal, etc. processed by the processor 110. The display 320 may be implemented as a plasma display panel (PDP), a liquid crystal display (LCD), an organic light-emitting diode (OLED) display, a flexible display, or the like, and may also be implemented as a three-dimensional (3D) display. Furthermore, the display 320 may be formed as a touch screen to serve as an input device as well as an output device.

The display 320 may output various content input via a communication interface (not shown) or the I/O interface 370, or output images stored in the memory 120. In addition, the display 320 may output on a screen information input by the user via the I/O interface 370.

The display 320 may include a display panel. The display panel may be an LCD panel or panels including various light-emitting elements such as an LED, an OLED, and a cold cathode fluorescent lamp (CCFL). Furthermore, the display panel may include not only a flat display device but also a curved display device with a screen having a curvature or a flexible display device with an adjustable curvature. The display panel may be a 3D display or an electrophoretic display.

An output resolution of the display panel may include, for example, High Definition (HD), Full HD, Ultra HD, or resolutions higher than the Ultra HD.

In the embodiment of FIG. 12, the electronic device 100 is illustrated as including the display, but is not limited thereto. The electronic device 100 may be connected to a separate display device including a display via wired or wireless communication, and configured to transmit video/audio signals to the display device.

In an embodiment, the electronic device 100 may be implemented to operate by being connected to an external display even without a built-in display.

For example, the electronic device 100 may be implemented in a form of outputting an image to a separate external display through a video or audio output port, as a device without a display or including a simple display for notifications or the like, such as a STB or an Apple TV.

In this case, the electronic device 100 may include an output port for outputting a video or audio signal to a display. The output port may have a form that allows simultaneous transmission of a video signal and an audio signal, such as HDMI, DP, or Thunderbolt, or may have respective ports for separately transmitting the video signal and the audio signal.

In an embodiment, the electronic device 100 may transmit a video signal or an audio signal via wired or wireless communication or the like.

The audio processor 385 processes audio data. The audio processor 385 may perform various types of processing, such as decoding, amplification, noise reduction, etc., on the audio data. Moreover, the audio processor 385 may include a plurality of audio processing modules to process audio corresponding to a plurality of pieces of content.

According to control by the processor 110, the audio output interface 390 outputs audio contained in a broadcast signal received via the tuner 340. The audio output interface 390 may output audio (e.g., a voice and a sound) input via the communication interface 350 or the I/O interface 370. Furthermore, the audio output interface 390 may output audio stored in the memory 120 under the control of the processor 110. The audio output interface 390 may include at least one of a speaker, a headphone output terminal, or a Sony/Phillips Digital Interface (S/PDIF) output terminal.

The power supply 395 supplies, under the control of the processor 110, power input from an external power source to internal components of the electronic device 100. The power supply 395 may also supply, under the control of the processor 110, power output from one or more batteries (not shown) located within the electronic device 100 to the internal components.

The memory 120 may store various pieces of data, programs, or applications for driving and controlling the electronic device 100 under the control of the processor 110. Although not shown, the memory 120 may include a broadcasting receiving module, a channel control module, a volume control module, a communication control module, a speech recognition module, a motion recognition module, a light receiving module, a display control module, an audio control module, an external input control module, a power control module, a power control module for an external device connected wirelessly (e.g., via Bluetooth), a speech database (DB), or a motion DB. The modules and DBs of the memory 120 not shown in FIG. 14 may be implemented in the form of software in order to perform a broadcast reception control function, a channel control function, a volume control function, a communication control function, a speech recognition function, a motion recognition function, a light receiving control function, a display control function, an audio control function, an external input control function, a power control function, or a power control function for the external device connected wirelessly (e.g., via Bluetooth). The processor 110 may perform the respective functions by using the software stored in the memory 120.

In FIG. 12, the processor 110 is illustrated as a single element, but is not limited thereto. In an embodiment of the disclosure, the processor 110 may include a single processor or a plurality of processors.

In an embodiment of the present disclosure, the processor 110 may be configured as a dedicated hardware chip for performing AI training.

A 'module' included in the memory 120 refers to a unit for processing functions or operations performed by the processor 110, and may be implemented as software such as instructions, algorithms, data structures, or program code.

Moreover, the block diagram of the electronic device 100 illustrated in FIGS. 11 and 12 is a block diagram for an embodiment. Each component in the block diagram may be integrated, added, or omitted according to specifications of the electronic device 100 that is actually implemented. In other words, two or more components may be combined into a single component, or a single component may be subdivided into two or more components when necessary. Furthermore, functions performed by each block are intended to describe embodiments, and a specific operation or device related to the functions does not limit the scope of the present disclosure.

According to an embodiment, an operating method of the electronic device 100 may be implemented in the form of recording media including instructions executable by a computer, such as a program module executed by the computer. The computer-readable recording media may be any available media that are accessible by the computer, and include both volatile and non-volatile media and both removable and non-removable media. The computer-readable recording media may include program commands, data files, data structures, etc. either alone or in combination. The program commands recorded on the computer-readable recording media may be designed and configured specially for the present disclosure or may be known to and be usable by those of ordinary skill in the art of computer software. Examples of the computer-readable recording media include magnetic media such as hard disks, floppy disks, and magnetic tapes, optical media such as compact disk ROM (CD-ROM) and digital versatile disks (DVDs), magneto-optical media such as floptical disks, and hardware devices that are specially configured to store and perform program commands, such as ROM, RAM, flash memory, etc. Examples of program commands include not only machine code such as that generated by a compiler but also high-level language code that may be executed by a computer using an interpreter or the like.

According to an embodiment, methods according to various embodiments disclosed herein may be included in a computer program product when provided. The computer program product may be traded, as a product, between a seller and a buyer. The computer program product may be distributed in the form of a machine-readable storage medium (e.g., CD-ROM) or distributed (e.g., downloaded or uploaded) on-line via an application store or directly between two user devices (e.g., smartphones). For online distribution, at least a part of the computer program product (e.g., a downloadable app) may be at least transiently stored or temporally generated in a machine-readable storage medium such as a memory of a server of a manufacturer, a server of an application store, or a relay server.

The above description is provided for illustration, and it will be understood by one of ordinary skill in the art that various modifications may be readily made in other specific forms without departing from technical spirit or essential features of the disclosure. Accordingly, the above-described embodiments and all aspects thereof are merely examples and are not limiting. For example, each component defined as an integrated component may be implemented in a distributed fashion, and likewise, components defined as separate components may be implemented in an integrated form.

According to an embodiment, in a method of outputting an advertisement performed by an electronic device, an operating method of the electronic device may be provided, the operating method including, when an application corresponding to an output of a screen including an advertisement area is executed, outputting a first advertisement having a high unit price from among an advertisement list previously obtained from a server, transmitting, to the server, an advertisement request based on the output and updating the advertisement list by obtaining at least one advertisement from the server, and, when a refresh time set based on a peak time predicted to have high advertisement revenue is reached, transmitting an advertisement request to the server and updating the advertisement list by obtaining at least one advertisement from the server.

The operating method of the electronic device may include, when an expiration time of an advertisement included in the advertisement list has passed, transmitting an advertisement request to the server and updating the advertisement list by obtaining at least one advertisement from the server.

The advertisement request based on the output may, by providing output information of the first advertisement to the server, enable the server to determine whether to repeatedly output the first advertisement or whether to output an advertisement having a high unit price among other advertisements excluding the first advertisement.

The peak time may be obtained through a neural network trained based on execution history information of the application corresponding to the output of the screen including the advertisement area.

The at least one advertisement obtained from the server may include each advertisement having the highest unit price for each advertisement type among advertisements outputtable at a time of the obtaining.

The at least one advertisement obtained from the server may include all advertisements belonging to an advertisement type having the highest unit price from among the advertisements outputtable at the time of the obtaining.

The at least one advertisement obtained from the server may include a set of advertisements obtained by using a neural network trained to, based on an advertisement type, an advertisement unit price, an advertisement output time, whether repeated output of an advertisement is possible, and an available advertisement output time, output a set of advertisements that generate the largest advertisement revenue during the available advertisement output time.

The advertisement type may include a roadblock-type advertisement, a reservation-type advertisement, a promotion-type advertisement, and a house-type advertisement.

All the obtained advertisements belonging to the advertisement type having the highest unit price may be sequentially output, starting from an advertisement having the highest unit price, each time an application corresponding to the output of the screen including the advertisement area is executed.

The operating method of the electronic device may include outputting a second advertisement having a high unit price from among the advertisement list including the advertisements having the highest unit price for each advertisement type, and outputting an advertisement having a high unit price among advertisements of types different from that of the second advertisement during a remaining advertisement output time before the advertisement list is updated.

According to an embodiment, an electronic device may include memory storing one or more instructions and one or more processors configured to execute the one or more instructions stored in the memory, and the at least one processors may be configured to execute the one or more instructions to, when an application corresponding to an output of a screen including an advertisement area is executed, output a first advertisement having a high unit price from among an advertisement list previously obtained from a server, transmit, to the server, an advertisement request based on the output and updating the advertisement list by obtaining at least one advertisement from the server, and, when a refresh time set based on a peak time predicted to have high advertisement revenue is reached, transmit an advertisement request to the server and update the advertisement list by obtaining at least one advertisement from the server.

The one or more processors may be configured to execute the one or more instructions to, when an expiration time of an advertisement included in the advertisement list has passed, transmit an advertisement request to the server and update the advertisement list by obtaining at least one advertisement from the server.

The advertisement request based on the output may, by providing output information of the first advertisement to the server, enable the server to determine whether to repeatedly output the first advertisement or whether to output an advertisement having a high unit price among other advertisements excluding the first advertisement.

The peak time may be obtained through a neural network trained based on execution history information of the application corresponding to the output of the screen including the advertisement area.

The at least one advertisement obtained from the server may include each advertisement having the highest unit price for each advertisement type among advertisements outputtable at a time of the obtaining.

The at least one advertisement obtained from the server may include all advertisements belonging to an advertisement type having the highest unit price among the advertisements outputtable at the time of the obtaining.

The at least one advertisement obtained from the server may include a set of advertisements obtained by using a neural network trained to, based on an advertisement type, an advertisement unit price, an advertisement output time, whether repeated output of an advertisement is possible, and an available advertisement output time, output a set of advertisements that generate the largest advertisement revenue during the available advertisement output time.

The advertisement type may include a roadblock-type advertisement, a reservation-type advertisement, a promotion-type advertisement, and a house-type advertisement.

All the obtained advertisements belonging to the advertisement type having the highest unit price may be sequentially output, starting from an advertisement having the highest unit price, each time an application corresponding to the output of the screen including the advertisement area is executed.

There is provided a computer-readable recording medium having recorded thereon a program for performing, on a computer, the operating method of the electronic device.

## Claims

1. An operating method of an electronic device, the operating method comprising:
when a refresh time based on a peak time related to advertisement revenue is identified, updating an advertisement list including at least one advertisement obtained from a server;
transmitting, to an application corresponding to an output of a screen including an advertisement area, data corresponding to a first advertisement identified based on an advertisement unit price, from among the advertisement list; and
when the application is executed, outputting the first advertisement based on the data corresponding to the first advertisement.

2. The operating method of claim 1, further comprising, when an expiration time of an advertisement included in the advertisement list has passed, transmitting an advertisement request to the server and updating the advertisement list by obtaining at least one advertisement from the server.

3. The operating method of claim 1 or 2, wherein whether to output an advertisement identified based on a unit price, other than the first advertisement, is identified by providing output information of the first advertisement to the server.

4. The operating method of any one of claims 1 to 3, wherein the peak time is obtained through a neural network trained based on execution history information of the application corresponding to the output of the screen including the advertisement area.

5. The operating method of any one of claims 1 to 4, wherein the at least one advertisement obtained from the server includes each advertisement having a highest unit price for each advertisement type among advertisements outputtable at a time of the obtaining.

6. The operating method of any one of claims 1 to 4, wherein the at least one advertisement obtained from the server includes all advertisements belonging to an advertisement type having the highest unit price among advertisements outputtable at the time of the obtaining.

7. The operating method of any one of claims 1 to 4, wherein the at least one advertisement obtained from the server includes a set of advertisements obtained by using a neural network trained to, based on an advertisement type, an advertisement unit price, an advertisement output time, whether repeated output of an advertisement is possible, and an available advertisement output time, output a set of advertisements that generate a largest advertisement revenue during the available advertisement output time.

8. The operating method of any one of claims 5 to 7, wherein the advertisement type includes a roadblock-type advertisement, a reservation-type advertisement, a promotion-type advertisement, and a house-type advertisement.

9. The operating method of claim 6, wherein when an application corresponding to the output of the screen including the advertisement area is executed, all the obtained advertisements belonging to the advertisement type having the highest unit price are sequentially output, starting from an advertisement having the highest unit price.

10. The operating method of claim 5, further comprising, during a remaining advertisement output time before the advertisement list is updated, outputting a screen including a second advertisement identified based on a unit price from among advertisements of types different from a type of the first advertisement.

11. An electronic device comprising:
memory (120) storing one or more instructions; and
one or more processors (110) configured to execute the one or more instructions stored in the memory (120), wherein the one or more processors (110) are configured to execute the one or more instructions to,
when a refresh time based on a peak time related to advertisement revenue is identified, update an advertisement list including at least one advertisement obtained from a server,
transmit, to an application corresponding to an output of a screen including an advertisement area, data corresponding to a first advertisement identified based on an advertisement unit price from among the advertisement list, and
when the application is executed, output the first advertisement based on the data corresponding to the first advertisement.

12. The electronic device of claim 11, wherein the one or more processors (110) are further configured to execute the one or more instructions to, when an expiration time of an advertisement included in the advertisement list has passed, transmit an advertisement request to the server and update the advertisement list by obtaining at least one advertisement from the server.

13. The electronic device of claim 11 or 12, wherein the one or more processors (110) are further configured to execute the one or more instructions to, by providing output information of the first advertisement to the server, cause the server to identify whether to output an advertisement identified based on a unit price, other than the first advertisement.

14. The electronic device of any one of claims 11 to 13, wherein the peak time is obtained through a neural network trained based on execution history information of the application corresponding to the output of the screen including the advertisement area.

15. A computer-readable recording medium having recorded thereon a program for performing the operating method of any one of claims 1 to 10 on a computer.
